# EUROPEAN PATENT SPECIFICATION

(11) **EP 1 722 897 B1**
(45) Date of publication and mention of the grant of the patent: **21.11.2007**
(21) Application number: 05702503.3
(22) Date of filing: 24.01.2005
(51) Int. Cl.: B05C 1/00

(54) **A DEVICE FOR DEPOSITING DROPS OF ADHESIVE MATERIAL ON A SURFACE IN A PREDETERMINED DISTRIBUTION PATTERN**
VORRICHTUNG ZUM AUFBRINGEN VON KLEBSTOFFMATERIALTROPFEN AUF EINER FLÄCHE IN EINEM VORBESTIMMTEN VERTEILUNGSMUSTER
DISPOSITIF DE DEPOT DE GOUTTES D'UN MATERIAU ADHESIF SUR UNE SURFACE DANS UN MOTIF A DISTRIBUTION PREDETERMINEE

(30) Priority: 27.02.2004 IT MO20040047
(43) Date of publication of application: 22.11.2006
(73) Proprietor: System S.p.A., 41042 Fiorano Modenese (MO) (IT)
(72) Inventor: TORO, Andrea, I-41049 Sassuolo, Modena (IT)
(74) Representative: Gotra, Stefano
(86) International application number: PCT/IB2005/000379
(87) International publication number: WO 2005/084822

(56) References cited:
- US-A- 3 010 427
- US-A- 3 322 591
- US-A- 4 010 711
- US-A- 4 654 108
- PATENT ABSTRACTS OF JAPAN vol. 1998, no. 04, 31 March 1998 (1998-03-31) -& JP 09 327644 A (SONY CORP), 22 December 1997 (1997-12-22)
- PATENT ABSTRACTS OF JAPAN vol. 018, no. 317 (M-1622), 16 June 1994 (1994-06-16) -& JP 06 071632 A (INAX CORP), 15 March 1994 (1994-03-15)

## Description

### Technical Field

The invention relates to a device for depositing drops of adhesive material on a surface in a predetermined distribution pattern.

### Background Art

A preferred field of use of the device of the invention is in the realisation of ordered groups of mosaic-style ceramic tiles. In these ordered groups, the tiles, which are usual ceramic tiles but of small size, are conjoined flexibly using drops of glue which enable spaces - in effect, fugue lines - between the tiles to be maintained. The tiles can be arranged to form, for example, a rectangular or square matrix which can be laid instead of larger numbers of single small mosaic-style tiles.

Realising these groups of tiles involves depositing a determined number of glue drops on a smooth tray of non-adherent material and positioning a predetermined number of tiles on the tray so that the tiles themselves marginally overlap the drops of glue but do not enter into contact with each other.

A first known type of device for the depositing of drops of glue includes the use of one or more injectors, which inject the glue onto the surface destined to receive the glue drops. The injectors, which are in relative motion with respect to the surface, inject the glue onto the surface at predetermined time intervals.

A second known type of device includes the use of a "silk screen" type slab bearing a plurality of holes arranged according to the position which the points of glue are to occupy on the surface which will receive them. A doctor positioned above the slab pushes the previously-distributed glue through the slab. The surface on which the glue is destined to be deposited is positioned below the "silk screen" so that the glue, selectively crossing through the "screen", is deposited according to the pre-established pattern.

Known-type devices exhibit some drawbacks.

In the first case the presence of the injectors makes the device relatively expensive due to the numerous supply and control devices required. In general, in order to limit the cost and complication of the device, the number of injectors used is lower than the number of drops of glue to be deposited. To realise the required pattern it is therefore necessary to use a mechanism which actuates a relative motion between the injectors and the surface to be glued, and this inevitably slows down operations. The injectors also require maintenance operations to prevent or remove the formation of hardened drops of glue.

In the second of the above-described cases, the "silk screen" type system of depositing the glue, the device is relatively expensive and complex. The "silk screen" board necessitates frequent cleaning operations in order to work correctly and must be substituted when a different glue drop pattern is required.

US 4010711 shows an apparatus for applying a soldering paste to discrete spots on components prior to soldering from a bath of soldering paste comprise at least one metering plunger. The plunger is attached to a vertically reciprocable slide and adapted to dip on to the soldering paste during a first descent. The entrained amount of soldering paste is the transferred to the required spots on the componente or components located in the path of a second descent.

US3010427 relates to a machine for dispensing a liquid adhesive onto sheet material. The machine comprises a horizontal bar having a plurality of vertical probes extending from its lower end, the machine performs a cycle comprising: lowering the bar into the reservoir containing the liquid adhesive vertically lifting the bar out of the adhesive; clearing the bar from the reservoir; lowering the bar until the probes contact the sheet of paper; lifting the bar and again bringing it back to the starting point of the cycle.

JP 09327644 shows a device and a method for cleaning the end of a transfer pin and applaying stably the liquid agent in the given state all times.

The main aim of the present invention is to provide a device for depositing drops of glue onto a surface, which require no use of injectors and "silk screen" type boards.

An advantage of the invention is that the solutions proposed are extremely simple and economical in realisation and control.

A further advantage of the invention is that the depositing of the glue drops is extremely rapid and precise.

These aims and advantages and others besides are all attained by the present invention, as it is characterized in the claims that follow.

### Disclosure of Invention

Further characteristics and advantages of the present invention will better emerge from the detailed description that follows of some preferred but non-exclusive embodiments of the invention, illustrated purely by way of non-limiting examples in the accompanying figures of the drawings, in which:
figure 1 is a schematic front view in vertical elevation of a first embodiment;
figure 2 is a schematic front view in vertical elevation of a second embodiment, represented in a first operative configuration;
figure 3 is a part of the view of figure 2, in a second operative configuration;
figure 4 is the view of figure 2 is a third operative configuration;
figure 5 is the view of figure 2 in a fourth operative configuration;
figure 6 is part of a section made according to line II-II of figure 3;
figure 7 is part of a section made according to line IV-IV of figure 5;
figure 8 is a schematic front view in vertical elevation of an embodiment, which is not part of the invention.

The device of the present invention comprises at least a support element 6, to which a plurality of projecting appendages 7 are fixed with a predetermined distribution.

The support element 6 is moved by special means between at least a first position, in which at least the ends of the projecting appendages 7 are immersed at least partially in a recipient 9 containing the glue, and at least a second position, in which the appendages 7 are first brought up to contact with at least a surface 5 and then distanced there-from, so that at least a part of the small quantities of glue on each appendage adheres to the surface 5. This enables a predetermined pattern of distribution of glue on the surface 5 to be achieved.

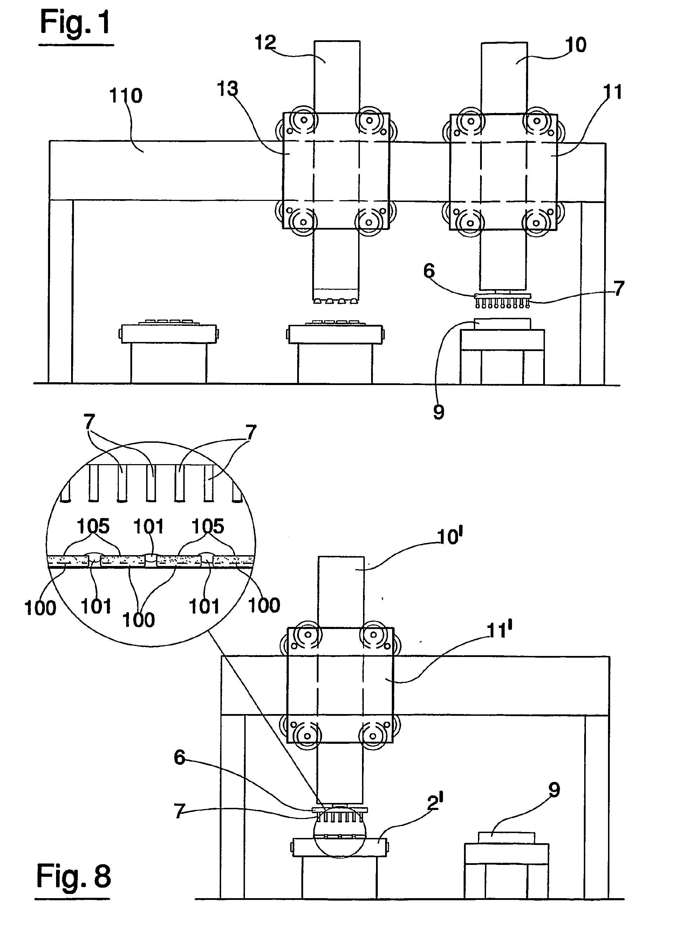

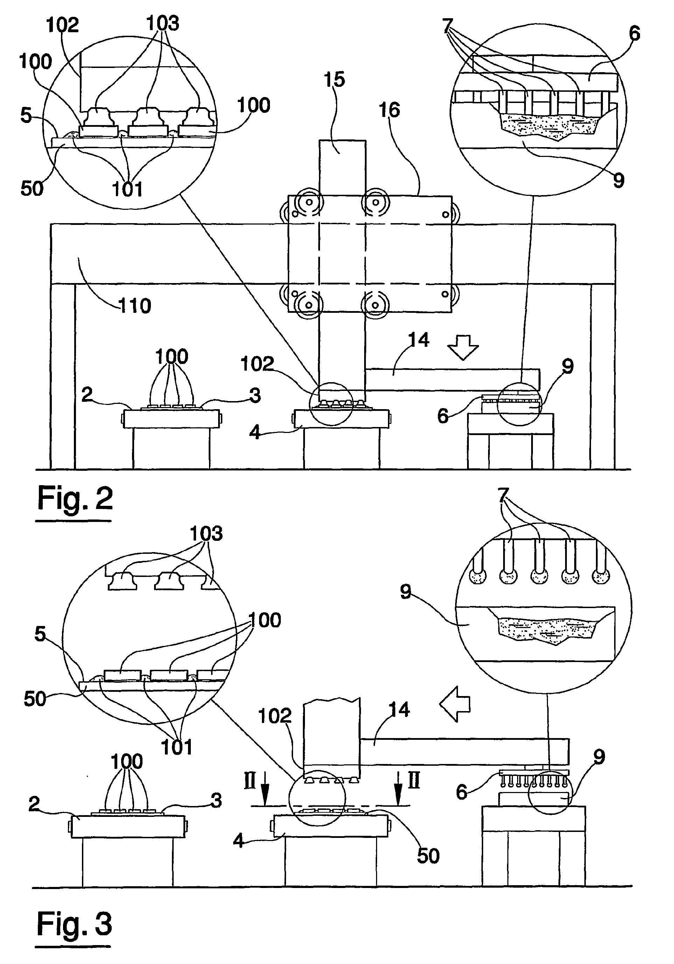

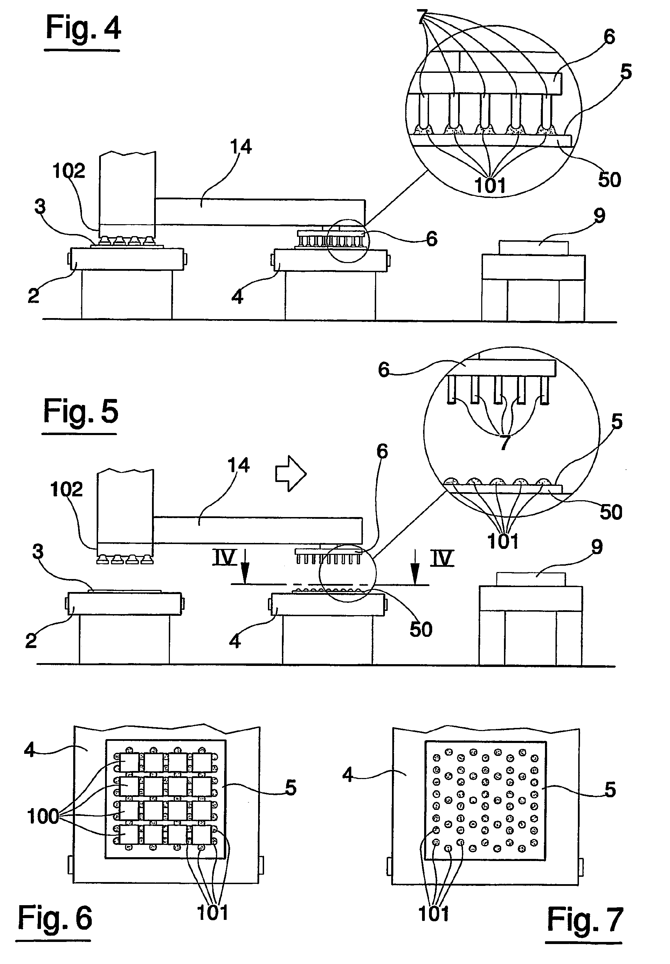

In a first and second embodiment of the device, to which figures 1 to 7 relate, the surface 5 is defined by the upper surface 5 of a support 50 which serves, as will become evident from the description of the invention, for realising ordered groups of mosaic-style ceramic tiles 100.

Thanks to the mobility of the support element 6, the relative projecting appendages 7 are immersed at least partially in the glue contained in the recipient 9 so as to be wetted. The subsequent raising of the support element 6 means that the ends of the projecting appendages 7, when exiting from the glue contained in the recipient 9, have small drops of glue adhering to them.

The support element 6, bearing the projecting appendages 7 with glue on them, is then positioned in proximity of the upper surface 5 in order that the projecting appendages 7 are brought up to the upper surface 5; in this way the drops of glue adhering to the ends of the projecting appendages 7 enter into contact with the upper surface 5. Then, by distancing (in the embodiment, raising) the ends of the projecting appendages 7 from the upper surface 5, a part of the glue of each drop remains adhering to the upper surface 5. The use of certain materials for realising the upper surface 5 and the projecting appendages 7 enables an accurate measurement of the amount of the amount of glue that remains on the upper surface 5 after the projecting appendages 7 have been distanced therefrom.

Thus, small drops of glue are deposited on the upper surface 5, in a predetermined geometrical arrangement (which is obviously determined by the arrangement of the projecting appendages 7).

The device of the invention further comprises a first transport plane 2, predisposed for transporting the ceramic tiles 100 arranged in correct order on the trays 3, and a second transport plane 4, parallel to the first transport plane 2, predisposed for transporting the supports 50. The ordered arrangement of the ceramic tiles 100 on the trays 3 is done at a station, not illustrated in the figures of the drawings, positioned upstream of the first transport plane 2. The recipient 9 which contains the glue is arranged by the side of the second transport plane 4. In the first embodiment the support element 6 is mobile above the first and second transport planes 2, 4, by means which comprise a first stem 10 which is mobile, in a perpendicular direction to the first and second transport planes 2,4, with respect to a first slide 11 which is transversally mobile on a frame 110 with respect to the first and second transport planes 2,4, on a parallel plane thereto.

Also provided are means for transferring the ceramic tiles 100, while maintaining the arrangement thereof, from the trays 3 to the supports 50. These means comprise a head 102 provided with a plurality of suckers 103 destined to adhere on command to the tiles 100. The head 102 is associated to a second stem 12 which is mobile, in a perpendicular direction to the first and second transport planes 2,4, with respect to a second slide 13 which is transversally mobile on the frame 110 with respect to the first and second transport planes 2, 4, on a parallel plane thereto.

In the preferred embodiment, illustrated in figures from 2 to 7, the recipient 9 containing the glue is arranged by the side of the second transport plane 4 at a distance from the second transport plane 4 which coincides with the distance at which the first transport plane 2 and the second transport plane 4 are arranged. The support element 6 and the head 102 are associated to a crossbar 14 which is mobile above the first and second transport planes 2, 4 and is powered by means comprising a stem 15 which is mobile in a perpendicular direction to the first and second transport planes 2, 4, with respect to a slide 16. The slide 16 is mobile transversally on the frame 110 with respect to the first and the second transport planes 2, 4 on a parallel plane with respect thereto. The support element 6 and the head 102 are separated by a distance which coincides with the distance between the recipient 9 and the second transport plane 4 and also with the distance between the first and second transport planes 4.

The relative positions of the support element 6, the head 102, the first and second transport planes 2, 4 and the recipient 9 enable a very efficient operation of the device of the invention.

In a start-cycle position, the support element 6 is in the first position, i.e with at least the ends of the projecting appendages 7 immersed at least partially in the recipient 9 containing the glue. In this initial position the cross-bar 14 is a lowered position in which the suckers 103 of the head 102 are close to the upper surface 5 of a support 50 arranged on the second transport plane 4. From this initial position the cross-bar 14 is raised and translates so as to displace the support element 6 towards the second transport plane 4. When the support element 6 is at the position of the upper surface 5, the cross-bar 14 lowers and brings the support element 6 into the second position. In this position, as previously mentioned, the appendages 7 are brought up to the upper surface 5 and the glue they are moistened with is deposited at least partially on the upper surface 5, beginning the depositing of glue drops 101. In this position the head 102 is close to the first transport plane 2 and the suckers 103 adhere to the tiles 100 of a tray 3 positioned on the first transport plane 2. From this position the cross-bar 14 is raised once more, leaving the glue drops 101, and translates, bringing the support element 6 to the recipient 9 and returning the head 102, to the suckers 103 of which the tiles 100 adhere, to the second transport plane 4. At this point the cross-bar 14 lowers towards the initial position, the ends of the projecting appendages 7 immerse in the glue contained in the recipient 9, and at the same time the suckers 103 release the tiles 100 onto the upper surface 5 on which previously the glue drops 101 were deposited, by means of the projecting appendages 7. The glue drops 101 are deposited on the upper surface 5 in a predetermined pattern in order that the tiles 100 are superposed at least partially on the glue drops 101. Each glue drop 101 is in effect a connection bridge between at least two adjacent tiles 100 which are therefore connected to each other without entering into reciprocal contact.

The described operations define a work cycle of the device. At the end of this cycle the transport planes 2, 4 advance, bringing a new tray 3 into position, containing other tiles 100, and a new support 50, and a new work cycle is initiated. The advancement of the second transport plane 4 brings the support 50 with the tiles 100 deposited on the glue drops 101 towards a heated chamber or kiln, not illustrated in the figures, internally of which the glue is activated and the connections between the tiles 100 made solid.

With respect to the first embodiment illustrated in figure 1, the movements of the support element 6 and the head 102 are independent, but the stages of the work cycle remain the same.

In a futher embodiment of the device which is not part of the invention, illustrated in figure 8, the surface on which the glue drops 101 are deposited is defined by the plane containing the rest surfaces 105 of a plurality of ceramic tiles 100 lying on a transport plane 2'. In this embodiment there is a single transport plane on which the tiles 100 are positioned in ordered groups. The ordered groups may or may not be positioned on respective trays; in both cases the tiles 100 rest on the surfaces thereof which will be in view when laid, and their rest surfaces 105, which will contact with a laying surface when laid, are on view. The recipient 9 is arranged by the side of the transport plane 2'.

The support element 6 is mobile above the transport plane 2' by means comprising a first stem 10' which is mobile in a perpendicular direction to the transport plane 2' with respect to a slide 11'. The slide 11' is transversally mobile with respect to a frame 11', with respect to the transport plane 2' on a parallel plane with respect to the transport planes.

The depositing of the glue spots 101 is done directly between the tiles. When the support element 6 is in the second position, in which the appendages 7 are position at the surface defined by the rest surfaces 105 of the tiles 100, the projecting appendages 7 are positioned at the spaces between the ceramic tiles 100. In this way the drops of glue on the projecting appendages 7 are arranged between adjacent tiles 100, partly on the rest surfaces 105, partly on the sides of the tiles 100, similarly to what happens in the first embodiment of the device.

The process which is not part of the invention, enacted by the device of the above-described embodiments, realises a depositing of drops of glue on a surface in the predetermined arrangement, and comprises the following stages:
moistening the ends of the projecting appendages 7 which are fixed with a predetermined distribution to a support element 6 so that small quantities of the glue remain adhering to at least the ends of the projecting appendages 7;
bringing the ends of the projecting appendages 7 up to at least a surface 5 so that at least the small quantities of glue come into contact with the at least a surface 5;
distancing the projecting appendages 7 from the at least a surface 5 so that at least a part of the small quantities of glue remain adhering to the at least a surface.

The stage of moistening the ends of the projecting appendages 7 fixed to the support element 6 with glue include a stage of at least partially immersing the appendages 7 in a recipient containing glue.

The stage of bringing the ends of the projecting appendages 7 up to the at least a surface 5 is done subsequently to a raising of the support element 6 which brings the ends of the appendages 7 to emerge from the glue contained in the recipient 9.

The invention offers important advantages.

Firstly it is economical because no use of injectors and "silk screen" type systems are needed for depositing the glue, and instead the invention provides an extremely simply device to operate and control.

Also, there is no need for the number of cleaning operations required by injectors and silk screen devices, with a consequent increase in productivity and a reduction in operating costs.

## Claims

1. A device for depositing drops of adhesive material on a surface in a predetermined distribution pattern, wherein it comprises at least a support element (6) to which a plurality of projecting appendages (7) is fixed with a predetermined distribution, the support element (6) being mobile, by means for moving, between at least a first position, in which at least the ends of the projecting appendages (7) are immersed at least partially in a recipient (9) containing glue and at least a second position, in which the projecting appendages (7) are brought into contact with at least a surface ***characterized in that*** the at least a surface is an upper surface (5) of a support (50) ***and in that*** the device compris**es:**
a first transport plane (2) predisposed for conveying ceramic tiles (100) arranged in an order on trays (3);
a second transport plane (4), parallel to the first transport plane (2), which second transport plane (4) is predisposed for transporting the supports (50);
means for transferring the ceramic tiles (100), maintaining the order thereof, from the trays (3) to the supports (50);
the recipient (9) being arranged by a side of the second transport plane (4).

2. The device of claim 1, wherein the support element (6) is mobile above the first transport plane (2) and the second transport plane (4), being moved by means comprising a first stem (10), which is mobile in a perpendicular direction to the first transport plane (2) and the second transport plane (4), with respect to a first slide (11) which is mobile transversally, on a frame, with respect to the first transport plane (2) and the second transport plane (4), on a parallel plane to the first transport plane (2) and the second transport plane (4).

3. The device of claim 1, wherein the means for transferring the ceramic tiles (100), while maintaining the arrangement thereof, from the trays (3) to the supports (50), comprise a head (102) provided with a plurality of suckers (103) destined to adhere on command to the tiles (100), the head (102) being associated to a second stem (12) which is mobile, in a perpendicular direction to the first transport plane (2) and the second transport plane (4), with respect to a second slide (13) which is mobile transversally on a frame, with respect to the first transport plane (2) and the second transport plane (4), on a parallel plane to the first transport plane (2) and the second transport plane (4).

4. The device of claims 3, wherein the recipient (9) is arranged by a side of the second transport plane (4) at a distance from the second transport plane (4) which coincides with a distance at which the first transport plane (2) and the second transport plane (4) are positioned, the support element (6) and the head (102) being associated to a cross-bar (14) which is mobile above the first transport plane (2) and the second transport plane (4), which cross-bar (14) is moved by means comprising a stem (15) which is mobile in a perpendicular direction to the first transport plane (2) and the second transport plane (4), with respect to a slide (16) which is mobile transversally on a frame with respect to the first transport plane (2) and the second transport plane (4), the support element (6) and the head (102) being separated by a distance which coincides with a distance between the recipient (9) and the second transport plane (4) and a distance between the second transport plane (4) and the first transport plane (2).

5. The device of claim 1, wherein the at least a surface is defined by a plane containing rest surfaces (105) of a plurality of ceramic tiles (100) resting on a transport plane (2'), the recipient (9) being arranged by a side of the transport plane (2').

6. The device of claim 5, wherein the support element (6) is mobile, above the transport plane (2'), due to means which comprise a first stem (10') which is mobile in a perpendicular direction to the transport plane (2') with respect to a slide (11'), which slide (11') is mobile transversally with respect to the transport plane (2') on a plane which is parallel to the transport plane (2').

## Patentansprüche

1. Vorrichtung zur Ablage von Klebematerialtropfen auf einer Oberfläche nach einer festgelegten Musterverteilung, die mindestens ein Halteelement (6) umfasst, an das eine Mehrzahl von hervorspringenden Fortsätzen (7) in einer festgelegten Verteilung fixiert ist, wobei das Halteelement (6) durch Bewegungsmittel zwischen mindestens einer ersten Position, in der mindestens die Enden der hervorspringenden Fortsätze (7) mindestens teilweise in einen Behälter (9) mit Leim eingetaucht sind, und mindestens einer zweiten Position beweglich ist, in der die hervorspringenden Fortsätze (7) in Kontakt zu der mindestens einen Oberfläche gebracht werden, **dadurch gekennzeichnet, dass** die mindestens eine Oberfläche eine obere Fläche (5) eines Trägers (50) ist und dass die Vorrichtung Folgendes umfasst:
eine erste Transportebene (2), die für die Beförderung von Keramikfliesen (100) eingerichtet ist, die ordentlich auf Schalen (3) angeordnet sind;
eine zweite Transportebene (4), die parallel zur ersten Transportebene (2) verläuft, wobei die zweite Transportebene (4) für die Beförderung der Träger (50) eingerichtet ist;
Mittel für die Übergabe der Keramikfliesen (100), unter Beibehaltung deren Anordnung, von den Schalen (3) zu den Trägern (50);
der Behälter (9) ist dabei an einer Seite der zweiten Transportebene (4) angeordnet.

2. Vorrichtung nach Anspruch 1, bei der das Halteelement (6) über der ersten Transportebene (2) und der zweiten Transportebene (4) beweglich ist und durch Mittel bewegt wird, die einen ersten Schaft (10) umfassen, der senkrecht zur ersten Transportebene (2) und zur zweiten Transportebene (4) beweglich ist in Bezug auf einen ersten Schlitten (11), der auf einem Rahmen quer beweglich ist in Bezug auf die erste Transportebene (2) und die zweite Transportebene (4) auf einer zur ersten Transportebene (2) und zur zweiten Transportebene (4) parallel verlaufendenen Ebene.

3. Vorrichtung nach Anspruch 1, wobei die Mittel für die Übergabe der Keramikfliesen (100), unter Beibehaltung deren Anordnung, von den Schalen (3) auf die Träger (50) einen Kopf (102) umfassen, der eine Mehrzahl von Saugnäpfen (103) aufweist, die dazu bestimmt sind, auf Befehl an den Fliesen (100) anzuhaften, wobei der Kopf (102) mit einem zweiten Schaft (12) verbunden ist, der senkrecht zur ersten Transportebene (2) und zur zweiten Transportebene (4) beweglich ist in Bezug auf einen zweiten Schlitten (13), der auf einem Rahmen quer beweglich ist in Bezug auf die erste Transportebene (2) und die zweite Transportebene (4) auf einer parallel zur ersten Transportebene (2) und zur zweiten Transportebene (4) verlaufenden Ebene.

4. Vorrichtung nach Anspruch 3, in der der Behälter (9) an einer Seite der zweiten Transportebene (4) in einem Abstand zur zweiten Transportebene (4) angeordnet ist, der mit dem Abstand übereinstimmt, in dem die erste Transportebene (2) und die zweite Transportebene (4) positioniert sind, wobei das Halteelement (6) und der Kopf (102) mit einem Querbalken (14) verbunden sind, der über der ersten Transportebene (2) und der zweiten Transportebene (4) beweglich ist, wobei der Querbalken (14) durch Mittel bewegt wird, die einen Schaft (15) umfassen, der senkrecht zur ersten Transportebene und zur zweiten Transportebene (4) beweglich ist in Bezug auf einen Schlitten (16), der auf einem Rahmen quer beweglich ist in Bezug auf die erste Transportebene (2) und die zweite Transportebene (4), wobei das Halteelement (6) und der Kopf (102) durch einen Abstand getrennt sind, der einem Abstand zwischen dem Behälter (9) und der zweiten Transportebene (4) und einem Abstand zwischen der zweiten Transportebene (4) und der ersten Transportebene (2) entspricht.

5. Vorrichtung nach Anspruch 1, bei der die mindestens eine Oberfläche durch eine Ebene bestimmt ist, die Halteflächen (105) von einer Mehrzahl von auf einer Transportebene (2') liegenden Keramikfliesen (100) umfasst, wobei der Behälter (9) an einer Seite der Transportebene (2') angeordnet ist.

6. Vorrichtung nach Anspruch 5, bei der das Halteelement (6) über der ersten Transportebene (2') beweglich ist, und zwar durch Mittel, die einen ersten Schaft (10') umfassen, der senkrecht zur Transportebene (2') beweglich ist in Bezug auf einen Schlitten (11'), wobei der Schlitten (11') quer zur Transportebene (2') beweglich ist auf einer Ebene, die parallel zur Transportebene (2') verläuft.

## Revendications

1. Dispositif pour déposer des gouttes de matériau adhésif sur une surface selon un schéma de distribution prédéfini, comprenant au moins un élément de support (6) auquel sont fixés plusieurs appendices saillants (7) selon une distribution prédéfinie, ledit élément de support (6) étant mobile, par le biais de moyens d'entraînement, entre au moins une première position, dans laquelle au moins les extrémités des appendices saillants (7) sont immergées au moins en partie dans un récipient (9) contenant de la colle, et au moins une deuxième position, dans laquelle les appendices saillants (7) entrent en contact avec au moins une surface, **caractérisé en ce que** l'au moins une surface est une surface supérieure (5) d'un support (50) et **en ce que** le dispositif comprend :
un premier plan de transport (2) prédisposé pour transporter des carreaux céramiques (100) placés avec ordre sur des plateaux (3) ;
un deuxième plan de transport (4), parallèle au premier plan de transport (2), ce deuxième plan de transport (4) étant prédisposé pour transporter des supports (50) ;
des moyens pour transporter les carreaux céramiques (100), en maintenant leur ordre, des plateaux (3) aux supports (50) ;
le récipient (9) étant placé à côté du deuxième plan de transport (4).

2. Dispositif selon la revendication 1, dans lequel l'élément de support (6) est mobile au-dessus du premier plan de transport (2) et du deuxième plan de transport (4), par le biais de moyens comprenant une première tige (10), laquelle est mobile perpendiculairement au premier plan de transport (2) et au deuxième plan de transport (4), par rapport à un premier coulisseau (11), lequel est mobile transversalement sur un bâti, par rapport au premier plan de transport (2) et au deuxième plan de transport (4), sur un plan parallèle au premier plan de transport (2) et au deuxième plan de transport (4).

3. Dispositif selon la revendication 1, dans lequel les moyens utilisés pour transporter les carreaux céramiques (100), en maintenant leur ordre, des plateaux (3) aux supports (50), comprennent une tête (102) équipée de plusieurs ventouses (103) conçues pour adhérer sur commande aux carreaux (100), la tête (102) étant associée à une deuxième tige (12), laquelle est mobile perpendiculairement au premier plan de transport (2) et au deuxième plan de transport (4), par rapport à un deuxième coulisseau (13), lequel est mobile transversalement sur un bâti, par rapport au premier plan de transport (2) et au deuxième plan de transport (4), sur un plan parallèle au premier plan de transport (2) et au deuxième plan de transport (4).

4. Dispositif selon la revendication 3, dans lequel le récipient (9) est placé à côté du deuxième plan de transport (4), à une distance du deuxième plan de transport (4) qui coïncide avec la distance à laquelle sont positionnés le premier plan de transport (2) et le deuxième plan de transport (4), l'élément de support (6) et la tête (102) étant associés à une traverse (14), laquelle est mobile au-dessus du premier plan de transport (2) et du deuxième plan de transport (4), ladite traverse (14) étant déplacée par des moyens comprenant une tige (15), laquelle est mobile perpendiculairement au premier plan de transport (2) et au deuxième plan de transport (4), par rapport à un coulisseau (16), lequel est mobile transversalement sur un bâti, par rapport au premier plan de transport (2) et au deuxième plan de transport (4), l'élément de support (6) et la tête (102) étant séparés d'une distance qui coïncide avec la distance entre le récipient (9) et le deuxième plan de transport (4) et avec la distance entre le deuxième plan de transport (4) et le premier plan de transport (2).

5. Dispositif selon la revendication 1, dans lequel au moins une surface est définie par un plan contenant des surfaces d'appui (105) de plusieurs carreaux céramiques (100) mis sur un plan de transport (2'), le récipient (9) étant placé à côté du plan de transport (2').

6. Dispositif selon la revendication 5, dans lequel l'élément de support (6) est mobile au-dessus du plan de transport (2'), par le biais de moyens comprenant une première tige (10'), laquelle est mobile perpendiculairement au plan de transport (2'), par rapport à un coulisseau (11'), lequel coulisseau (11') est mobile transversalement par rapport au plan de transport (2'), sur un plan parallèle au plan de transport (2').
